# EUROPEAN PATENT APPLICATION

(11) **EP 4 167 066 A1**
(43) Date of publication of application: **19.04.2023**
(21) Application number: 21202945.8
(22) Date of filing: 15.10.2021
(51) Int. Cl.: G06F 3/0481

(54) **OPTIMIZING SCREEN USAGE**

(71) Applicant: Nokia Technologies Oy, 02610 Espoo (FI)
(72) Inventor: LAAKSONEN, Lasse Juhani, Tampere (FI); VILERMO, Miikka Tapani, Siuro (FI); LEHTINIEMI, Arto Juhani, Lempäälä (FI)
(74) Representative: Nokia EPO representatives

(57) **Abstract**

A methods and apparatuses for optimizing screen usage are disclosed. The solution comprises detecting (400) that the user of the apparatus is wearing sunglasses and controlling (402), based on the detection, allocation and presentation of the visual content on one or more displays of the apparatus according to the polarization characteristics of the one or more displays, where at least one display utilises different polarization characteristics compared to other displays if the apparatus has more than one display.

## Description

### Field

The exemplary and non-limiting embodiments of the disclosure relate generally to wireless communication systems. Embodiments of the disclosure relate especially to apparatuses and methods in wireless communication networks.

### Background

Terminal devices, such a smartphones, laptops, tablets and various other devices having a human-machine interface typically use screen for presenting visual information to users. These screens are in many cases touch sensitive, meaning that they also allow input via the screen.

In present devices, screens usually comprise polarizers. Applying polarization improves in many usage conditions the quality of the visual image displayed on the screens. For example, contrast of the images may be improved by polarization.

However, in some usage conditions polarized screens may cause problems. For example, when users of the devices having polarized screens wear polarized sunglasses, the visibility of the images on the screens may be very poor due to different polarization of the screen and the sunglasses.

### Summary

The following presents a simplified summary of the disclosure in order to provide a basic understanding of some aspects of the disclosure. This summary is not an extensive overview of the disclosure. It is not intended to identify key/critical elements of the disclosure or to delineate the scope of the disclosure. Its sole purpose is to present some concepts of the disclosure in a simplified form as a prelude to a more detailed description that is presented later.

According to an aspect of the present disclosure, there is provided an apparatus of claim 1.

According to another aspect of the present disclosure, there is provided a method of claim 9.

According to another aspect of the present disclosure, there is provided a computer program of claim 15

One or more examples of implementations are set forth in more detail in the accompanying drawings and the description below. Other features will be apparent from the description and drawings, and from the claims. The embodiments and/or examples and features, if any, described in this specification that do not fall under the scope of the independent claims are to be interpreted as examples useful for understanding various embodiments of the disclosure.

### List of drawings

Embodiments of the present disclosure are described below, by way of example only, with reference to the accompanying drawings, in which
Figures 1 and 2 illustrate examples of simplified system architecture of a communication system;
Figure 3 illustrates an example of a terminal device with two subscriber identities;
Figure 4 is a flowchart illustrating an embodiment;
Figures 5A and 5B illustrates examples polarization of displays;
Figure 6 illustrates an example of a terminal device comprising two displays;
Figure 7 is a flowchart illustrating an embodiment;
Figures 8A, 8B, 9A and 9B illustrate embodiments of allocating visual content;
Figures 10A, 10B, 10C and 10D illustrate embodiments of allocating visual content;
Figures 11A, 11B, 11C and 11D illustrate embodiments of adapting appearance of user interface elements; and
Figures 12A and 12B illustrate examples of adapting touch gestures.

### Description of some embodiments

The following embodiments are only examples. Although the specification may refer to "an", "one", or "some" embodiment(s) in several locations, this does not necessarily mean that each such reference is to the same embodiment(s), or that the feature only applies to a single embodiment. Single features of different embodiments may also be combined to provide other embodiments. Furthermore, words "comprising" and "including" should be understood as not limiting the described embodiments to consist of only those features that have been mentioned and such embodiments may also contain features, structures, units, modules etc. that have not been specifically mentioned.

Some embodiments of the present disclosure are applicable to a subscriber unit, a user device, a user equipment (UE), a user terminal, a terminal device, a mobile station, a mobile device, and any corresponding component or device that support needed functionality.

The protocols used, the specifications of communication systems, servers and user equipment, especially in wireless communication, develop rapidly. Such development may require extra changes to an embodiment. Therefore, all words and expressions should be interpreted broadly and they are intended to illustrate, not to restrict, embodiments.

In the following, different exemplifying embodiments will be described using, as an example of an access architecture to which the embodiments may be applied, a radio access architecture based on long term evolution advanced (LTE Advanced, LTE-A) or new radio (NR, 5G), without restricting the embodiments to such an architecture, however. The embodiments may also be applied to other kinds of communications networks having suitable means by adjusting parameters and procedures appropriately. Some examples of other options for suitable systems are the universal mobile telecommunications system (UMTS) radio access network (UTRAN), wireless local area network (WLAN or WiFi), worldwide interoperability for microwave access (WiMAX), Bluetooth^{®}, personal communications services (PCS), ZigBee^{®}, wideband code division multiple access (WCDMA), systems using ultrawideband (UWB) technology, sensor networks, mobile ad-hoc networks (MANETs) and Internet Protocol multimedia subsystems (IMS) or any combination thereof.

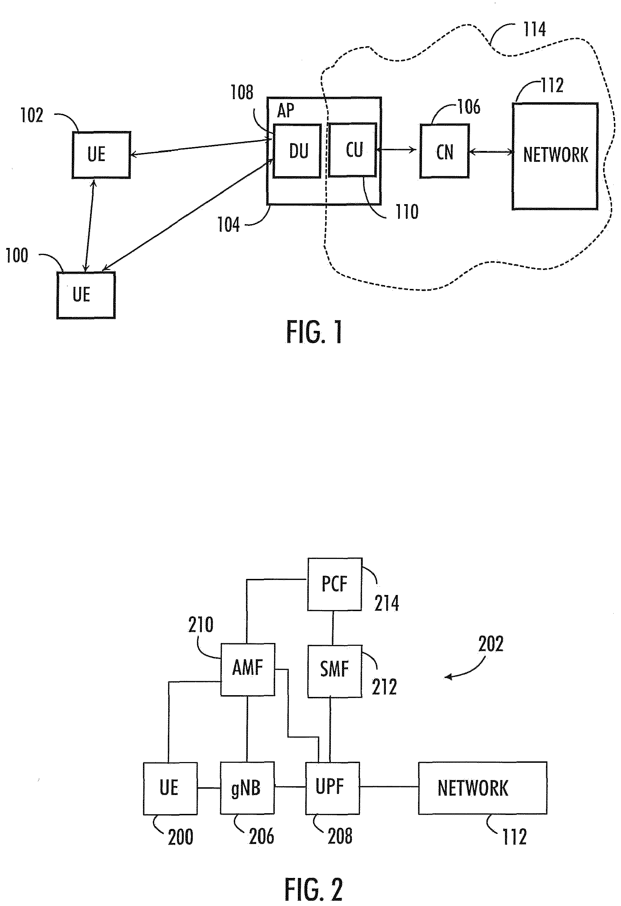

Fig. 1 depicts examples of simplified system architectures showing some elements and functional entities, all or some being logical units, whose implementation may differ from what is shown. The connections shown in Fig. 1 are logical connections; the actual physical connections may be different. It is apparent to a person skilled in the art that the system typically comprises also other functions and structures than those shown in Fig. 1.

The embodiments are not, however, restricted to the system given as an example but a person skilled in the art may apply the solution to other communication systems provided with necessary properties.

The example of Fig. 1 shows a part of an exemplifying radio access network.

Fig. 1 shows devices 100 and 102. The devices 100 and 102 are configured to be in a wireless connection on one or more communication channels with a node 104. The node 104 is further connected to a core network 106. In one example, the node 104 may be an access node such as (e/g)NodeB serving devices in a cell. In one example, the node 104 may be a non-3GPP access node. The physical link from a device to a (e/g)NodeB is called uplink or reverse link and the physical link from the (e/g)NodeB to the device is called downlink or forward link. It should be appreciated that (e/g)NodeBs or their functionalities may be implemented by using any node, host, server or access point etc. entity suitable for such a usage.

A communications system typically comprises more than one (e/g)NodeB in which case the (e/g)NodeBs may also be configured to communicate with one another over links, wired or wireless, designed for the purpose. These links may be used for signalling purposes. The (e/g)NodeB is a computing device configured to control the radio resources of communication system it is coupled to. The NodeB may also be referred to as a base station, an access point or any other type of interfacing device including a relay station capable of operating in a wireless environment. The (e/g)NodeB includes or is coupled to transceivers. From the transceivers of the (e/g)NodeB, a connection is provided to an antenna unit that establishes bi-directional radio links to devices. The antenna unit may comprise a plurality of antennas or antenna elements. The (e/g)NodeB is further connected to the core network 106 (CN or next generation core NGC). Depending on the deployed technology, the (e/g)NodeB is connected to a serving and packet data network gateway (S-GW +P-GW) or user plane function (UPF), for routing and forwarding user data packets and for providing connectivity of devices to one or more external packet data networks, and to a mobile management entity (MME) or access mobility management function (AMF), for controlling access and mobility of the devices.

Exemplary embodiments of a device are a subscriber unit, a user device, a user equipment (UE), a user terminal, a terminal device, a mobile station, a mobile device, etc

The device typically refers to a mobile or static device ( e.g. a portable or non-portable computing device) that includes wireless mobile communication devices operating with or without an universal subscriber identification module (USIM), including, but not limited to, the following types of devices: mobile phone, smartphone, personal digital assistant (PDA), handset, device using a wireless modem (alarm or measurement device, etc.), laptop and/or touch screen computer, tablet, game console, notebook, and multimedia device. It should be appreciated that a device may also be a nearly exclusive uplink only device, of which an example is a camera or video camera loading images or video clips to a network. A device may also be a device having capability to operate in Internet of Things (loT) network which is a scenario in which objects are provided with the ability to transfer data over a network without requiring human-to-human or human-to-computer interaction, e.g. to be used in smart power grids and connected vehicles. The device may also utilise cloud. In some applications, a device may comprise a user portable device with radio parts (such as a watch, earphones or eyeglasses) and the computation is carried out in the cloud.

The device illustrates one type of an apparatus to which resources on the air interface are allocated and assigned, and thus any feature described herein with a device may be implemented with a corresponding apparatus, such as a relay node. An example of such a relay node is a layer 3 relay (self-backhauling relay) towards the base station. The device (or in some embodiments a layer 3 relay node) is configured to perform one or more of user equipment functionalities.

Various techniques described herein may also be applied to a cyber-physical system (CPS) (a system of collaborating computational elements controlling physical entities). CPS may enable the implementation and exploitation of massive amounts of interconnected information and communications technology, ICT, devices (sensors, actuators, processors microcontrollers, etc.) embedded in physical objects at different locations. Mobile cyber physical systems, in which the physical system in question has inherent mobility, are a subcategory of cyber-physical systems. Examples of mobile physical systems include mobile robotics and electronics transported by humans or animals.

Additionally, although the apparatuses have been depicted as single entities, different units, processors and/or memory units (not all shown in Fig. 1) may be implemented.

5G enables using multiple input - multiple output (MIMO) antennas, many more base stations or nodes than the LTE (a so-called small cell concept), including macro sites operating in co-operation with smaller stations and employing a variety of radio technologies depending on service needs, use cases and/or spectrum available. 5G mobile communications supports a wide range of use cases and related applications including video streaming, augmented reality, different ways of data sharing and various forms of machine type applications (such as (massive) machinetype communications (mMTC), including vehicular safety, different sensors and real-time control. 5G is expected to have multiple radio interfaces, e.g. below 6GHz or above 24 GHz, cmWave and mmWave, and also being integrable with existing legacy radio access technologies, such as the LTE. Integration with the LTE may be implemented, at least in the early phase, as a system, where macro coverage is provided by the LTE and 5G radio interface access comes from small cells by aggregation to the LTE. In other words, 5G is planned to support both inter-RAT operability (such as LTE-5G) and inter-RI operability (inter-radio interface operability, such as below 6GHz - cmWave, 6 or above 24 GHz - cmWave and mmWave). One of the concepts considered to be used in 5G networks is network slicing in which multiple independent and dedicated virtual sub-networks (network instances) may be created within the substantially same infrastructure to run services that have different requirements on latency, reliability, throughput and mobility.

The current architecture in LTE networks is fully distributed in the radio and fully centralized in the core network. The low latency applications and services in 5G require to bring the content close to the radio which leads to local break out and multiaccess edge computing (MEC). 5G enables analytics and knowledge generation to occur at the source of the data. This approach requires leveraging resources that may not be continuously connected to a network such as laptops, smartphones, tablets and sensors. MEC provides a distributed computing environment for application and service hosting. It also has the ability to store and process content in close proximity to cellular subscribers for faster response time. Edge computing covers a wide range of technologies such as wireless sensor networks, mobile data acquisition, mobile signature analysis, cooperative distributed peer-to-peer ad hoc networking and processing also classifiable as local cloud/fog computing and grid/mesh computing, dew computing, mobile edge computing, cloudlet, distributed data storage and retrieval, autonomic self-healing networks, remote cloud services, augmented and virtual reality, data caching, Internet of Things (massive connectivity and/or latency critical), critical communications (autonomous vehicles, traffic safety, real-time analytics, time-critical control, healthcare applications).

The communication system is also able to communicate with other networks 112, such as a public switched telephone network, or a VoIP network, or the Internet, or a private network, or utilize services provided by them. The communication network may also be able to support the usage of cloud services, for example at least part of core network operations may be carried out as a cloud service (this is depicted in Fig. 1 by "cloud" 114). The communication system may also comprise a central control entity, or a like, providing facilities for networks of different operators to cooperate for example in spectrum sharing.

The technology of Edge cloud may be brought into a radio access network (RAN) by utilizing network function virtualization (NFV) and software defined networking (SDN). Using the technology of edge cloud may mean access node operations to be carried out, at least partly, in a server, host or node operationally coupled to a remote radio head or base station comprising radio parts. It is also possible that node operations will be distributed among a plurality of servers, nodes or hosts. Application of cloudRAN architecture enables RAN real time functions being carried out at or close to a remote antenna site (in a distributed unit, DU 108) and nonreal time functions being carried out in a centralized manner (in a centralized unit, CU 110).

It should also be understood that the distribution of labour between core network operations and base station operations may differ from that of the LTE or even be non-existent. Some other technology advancements probably to be used are Big Data and all-IP, which may change the way networks are being constructed and managed. 5G (or new radio, NR) networks are being designed to support multiple hierarchies, where MEC servers can be placed between the core and the base station or NodeB (gNB). It should be appreciated that MEC can be applied in 4G networks as well.

5G may also utilize satellite communication to enhance or complement the coverage of 5G service, for example by providing backhauling. Possible use cases are providing service continuity for machine-to-machine (M2M) or Internet of Things (loT) devices or for passengers on board of vehicles, or ensuring service availability for critical communications, and future railway/maritime/aeronautical communications. Satellite communication may utilise geostationary earth orbit (GEO) satellite systems, but also low earth orbit (LEO) satellite systems, in particular mega-constellations (systems in which hundreds of (nano)satellites are deployed). At least one satellite in the mega-constellation may cover several satellite-enabled network entities that create on-ground cells. The on-ground cells may be created through an on-ground relay node or by a gNB located on-ground or in a satellite.

It is obvious for a person skilled in the art that the depicted system is only an example of a part of a radio access system and in practice, the system may comprise a plurality of (e/g)NodeBs, the device may have an access to a plurality of radio cells and the system may comprise also other apparatuses, such as physical layer relay nodes or other network elements, etc. At least one of the (e/g)NodeBs or may be a Home(e/g)NodeB. Additionally, in a geographical area of a radio communication system a plurality of different kinds of radio cells as well as a plurality of radio cells may be provided. Radio cells may be macro cells (or umbrella cells) which are large cells, usually having a diameter of up to tens of kilometers, or smaller cells such as micro-, femto- or picocells. The (e/g)NodeBs of Fig. 1 may provide any kind of these cells. A cellular radio system may be implemented as a multilayer network including several kinds of cells. Typically, in multilayer networks, one access node provides one kind of a cell or cells, and thus a plurality of (e/g)NodeBs are needed to provide such a network structure.

For fulfilling the need for improving the deployment and performance of communication systems, the concept of "plug-and-play" (e/g)NodeBs has been introduced. Typically, a network which is able to use "plug-and-play" (e/g)Node Bs, includes, in addition to Home (e/g)NodeBs (H(e/g)nodeBs), a home node B gateway, or HNB-GW (not shown in Fig. 1). A HNB Gateway (HNB-GW), which is typically installed within an operator's network may aggregate traffic from a large number of HNBs back to a core network.

Fig.2 illustrates an example of a communication system based on 5G network components. A terminal device 200 communicating via a 5G network 202 with a data network 112. The terminal device 200 is connected to a Radio Access Network RAN node, such as (e/g)NodeB 206 which provides the user terminal with a connection to the network 112 via one or more User Plane Functions, UPF 208. The terminal device 200 is further connected to Core Access and Mobility Management Function, AMF 210, which is responsible for handling connection and mobility management tasks and can be seen from this perspective as the 5G version of Mobility Management Entity, MME, in LTE. The 5G network further comprises Session Management Function, SMF 212, which is responsible for subscriber sessions, such as session establishment, modify and release, and a Policy Control Function, PCF 214 which is configured to govern network behavior by providing policy rules to control plane functions.

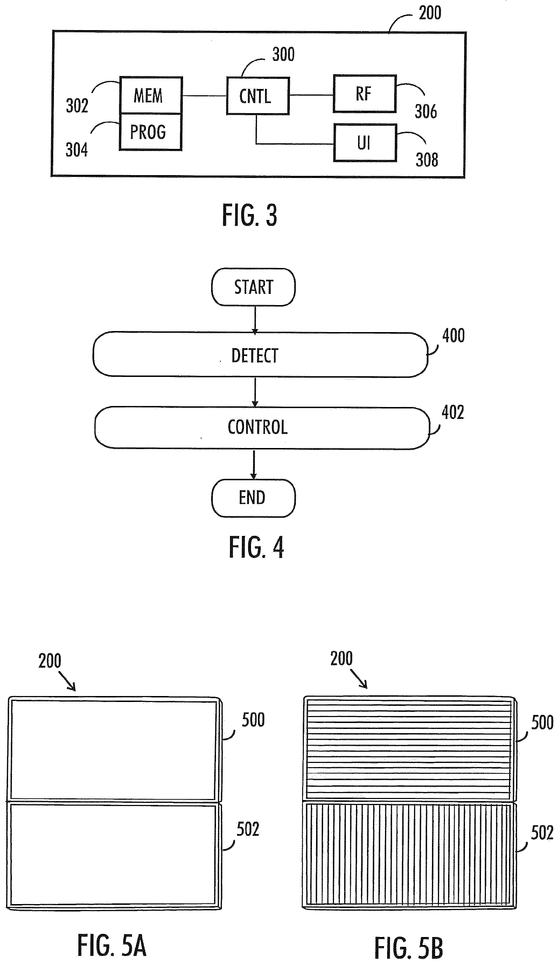

Fig.3 illustrate an embodiment. The figure illustrates a simplified example of an apparatus applying embodiments of the disclosure. It should be understood that the apparatus is depicted herein as an example illustrating some embodiments. It is apparent to a person skilled in the art that the apparatus may also comprise other functions and/or structures and not all described functions and structures are needed. Although the apparatus has been depicted as one entity, different modules and memory may be implemented in one or more physical or logical entities.

Fig. 3 illustrates a simplified example of an apparatus 200 applying embodiments of the disclosure. In some embodiments, the apparatus may be a terminal device or a part of a terminal device.

The apparatus 200 of the example includes a control circuitry 300 configured to control at least part of the operation of the apparatus.

The apparatus may comprise a memory 302 for storing data. Furthermore, the memory may store software 304 executable by the control circuitry 300. The memory may be integrated in the control circuitry.

In an embodiment, the software 304 may comprise a computer program comprising program code means configured to cause the control circuitry 300 of the apparatus to realise at least some of the embodiments described below.

The apparatus may comprise one or more interface circuitries 306, 308. The interface circuitries are operationally connected to the control circuitry 300. An interface circuitry 306 may be a set of transceivers configured to communicate with network, for example a RAN node, such as an (e/g)NodeB of a wireless communication network. The interface circuitry may be connected to an antenna arrangement (not shown). The apparatus may also comprise a connection to a transmitter instead of a transceiver.

The apparatus further comprises a user interface 308. The user interface may comprise a microphone, a speaker and a camera, for example. The user interface may further comprise one or more displays for displaying visual content to a user of the apparatus. In an embodiment, at least one display of the one or more displays utilise different polarization characteristics compared to other displays, if the apparatus has more than one display.

As used in this application, the term 'circuitry' refers to all of the following: (a) hardware-only circuit implementations, such as implementations in only analog and/or digital circuitry, and (b) combinations of circuits and software (and/or firmware), such as (as applicable): (i) a combination of processor(s) or (ii) portions of processor(s)/software including digital signal processor(s), software, and memory(ies) that work together to cause an apparatus to perform various functions, and (c) circuits, such as a microprocessor(s) or a portion of a microprocessor(s), that require software or firmware for operation, even if the software or firmware is not physically present.

This definition of 'circuitry' applies to all uses of this term in this application. As a further example, as used in this application, the term 'circuitry' would also cover an implementation of merely a processor (or multiple processors) or a portion of a processor and its (or their) accompanying software and/or firmware. The term 'circuitry' would also cover, for example and if applicable to the particular element, a baseband integrated circuit or applications processor integrated circuit for a mobile phone or a similar integrated circuit in a server, a cellular network device, or another network device.

Dual displays on terminal devices or smartphones have recently becoming more common. Using more than one display allows for a larger display footprint on a foldable device while maintaining a small overall device footprint, e.g., for pocketability. A terminal device having more than one display may treat the displays separately or combine them into one larger screen depending on the exact form factor and use case.

Usually is customary for modern displays to feature so-called polarizers, which are optical filters that allow light waves of a specific polarization to pass through and block light of other polarizations. Polarization is a property of transverse waves defining the geometrical orientation of light wave oscillations.

For example, displays utilising flat-panel liquid-crystal (LCD) technology are based on an array of liquid crystals that produces required visual images with the help of backlighting. There is also at least one polarized filter layer, which basically allows the creation of a brighter image. Typically, there are two such layers. In an LCD implementation, a first layer gives the light its polarization. Thus, a uniform polarized light source for the crystals or pixels is achieved. The polarized light then enters the liquid crystal array. After this, a second polarized filter is essentially used to display the illuminated liquid crystals. The second layer blocks a variable portion of the light depending on the angle of each liquid crystal or pixel. Without the polarizing filters, inferior image quality (due to very poor contrast, for example) or practically non-visible image would be produced.

However, in sunny conditions, for example, polarized screens may cause problems. When users of the devices are wearing polarized sunglasses, the visibility of the images on the screens may be very poor due to different polarization of the screen and the sunglasses.

The flowchart of Fig. 4 illustrates an embodiment. The flowchart illustrates an example of the operation of an apparatus. In an embodiment, the apparatus may be a terminal device or a part of a terminal device. In an embodiment, the apparatus comprises one or more displays for displaying visual content to a user of the apparatus, at least one of a first display or a second display utilising different polarization characteristics compared to other displays if the apparatus has more than one display.

In step 400, the apparatus is configured to detect that the user of the apparatus is wearing sunglasses. In an embodiment, the detection may be performed automatically utilising camera of the apparatus. In an embodiment, the user of the camera may indicate to the apparatus that sunglasses are being worn.

In an embodiment, the terminal device is configured to detect, utilising the camera of the terminal device, which display of the terminal device the user is looking at, if the apparatus has more than one display.

In step 402, the apparatus is configured to control, based on the detection, allocation and presentation of the visual content on one or more displays of the apparatus according to the polarization characteristics of the one or more displays, where at least one display utilises different polarization characteristics compared to other displays if the apparatus has more than one display.

In an embodiment, the terminal device comprises more than one displays. Figs. 5A and 5B illustrate an example where the terminal device 200 comprises two displays, a first display 500, and a second display 502. The terminal device 200 may be foldable, for example, and when opened the two displays may be available to the user of the terminal device.

In order to deal with the issue of degraded perceived image quality when the user is wearing polarized sunglasses, a terminal device with more than one displays may be designed such that different polarization is used for the two screens. Thus, at least one screen will remain visible with good image quality for a user with polarized sunglasses regardless of the device being held and viewed in portrait or landscape orientation.

Fig. 5B illustrates an example, where first display 500 of the terminal device 200 employs vertical polarization and the second display 502 employs horizontal polarization when the apparatus is held as indicated in Fig. 5B.

In terminal devices comprising two or more than one display, same visual content is not usually copied to both screens. Instead, the two (or more) displays are typically used in combination to enlarge the screen real estate by either extending the visual content across the displays (which can provide a good viewing experience especially if there is no noticeable gap between the screens) or by providing a first visual content for the first display and a second visual content for the second display thus increasing the amount of visible information/content.

In an embodiment, a terminal device may first determine whether the user of the device user is wearing sunglasses. If the user is not wearing sunglasses, the device can use a default, or prior art, operation mode. If user is wearing sunglasses, the device may modify the visual presentation in order to provide best possible viewing experience by exploiting the first orientation of the display polarization on the first display and the second orientation of the display polarization on the second display.

In an embodiment, the terminal device is configured to control, based on the detection of a user wearing sunglasses, allocate and present the visual content on the one or more displays according to the polarization characteristics of the one or more displays.

In an embodiment, the terminal device is configured to determine orientation of visual content to be displayed and allocate for the visual content a display having polarization characteristics allowing viewing the visual content in the determined orientation when the user is wearing sunglasses.

In an embodiment, when the terminal device comprises a first display having first polarization characteristics and a second display having second polarization characteristics, the terminal device may be configured to allocate portrait-oriented visual content to the first display and landscape-oriented visual content to the second display; and present visual content using at least one of the two displays.

In an embodiment, when the terminal device comprises a first display having first polarization characteristics and a second display having second polarization characteristics, the terminal device may be configured to allocate visual content to a display according to the polarization characteristics of the displays, detect rotating of the apparatus and allocate the visual content to another display based of the detection. Detection of rotating may be detected for example using a suitable sensor.

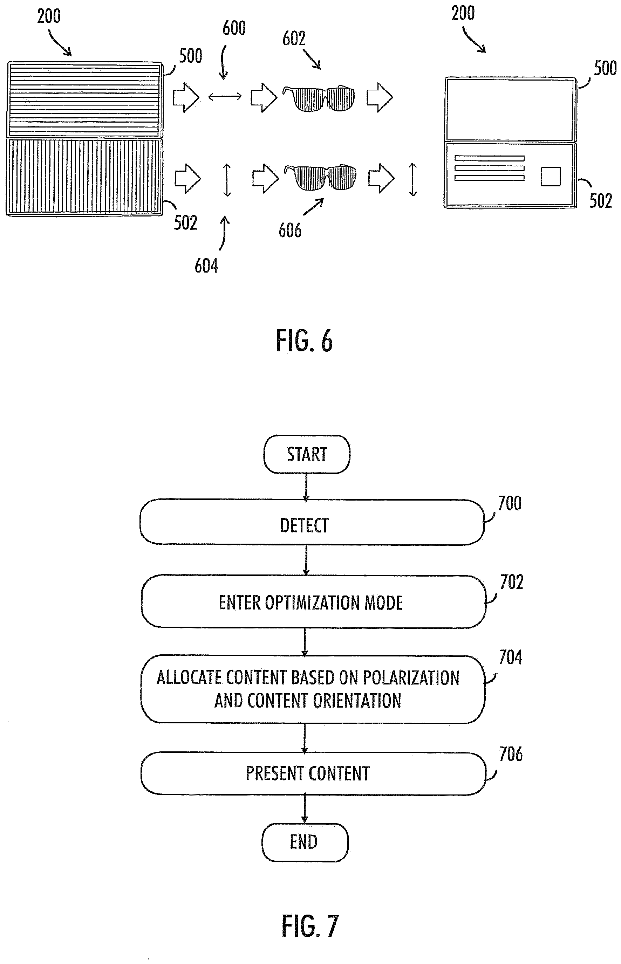

Fig. 6 illustrate an example of a terminal device 200 comprising two displays, a first display 500, and a second display 502 and where different polarization is used for the two screens. If a user with polarized glasses 602 looks at the first display 500 employing vertical polarization 600 when the apparatus is held as indicated in Fig. 6 (i.e. in landscape orientation), the different polarization characteristics lead to a situation that the first display 500 is in the worst case completely unusable. The user typically sees in the worst case the first display as completely black.

However, if the user with polarized glasses 606 looks at the second display 502 employing horizontal polarization 604 when the apparatus is held as indicated in Fig. 6, the similar polarization characteristics enable the user to view the visual content on the second display in a normal manner.

In an embodiment, in the situation of Fig. 6, it is beneficial to allocate presentation of landscape-oriented content on the second display 502. On the other hand, for optimal viewing of portrait-oriented content, user of the apparatus needs to rotate the apparatus to portrait orientation. For example, let us consider that the user rotates the apparatus counter-clockwise. Now the second display 502 becomes dark due to polarizing filter of the sunglasses. Thus, it is beneficial to present the portrait-oriented content on the first display 500.

Typically, in default or prior art operating mode, the whole display area (combination of first display and second display) would be used to present the content as large as possible. Thus, there would be no difference between portrait content and landscape content. In particular, utilizing the whole screen real estate makes sense if the gap between the displays is so small that it does not create any noticeable discontinuity in photo or video content. If the user is wearing polarized sunglasses, only one device orientation is however optimal/usable. For a gapless dual-screen device that forms a very square display when opened, this is less of an issue. For a dual-screen device with noticeable gap and/or a more longish form factor (e.g., flip phone form factor), this is a significant issue. Thus, adapting the presentation is often desirable for maintaining a good user experience.

The flowchart of Fig. 7 illustrates an embodiment. The flowchart illustrates an example of the operation of an apparatus of Fig. 6 comprising a dual display. In an embodiment, the apparatus may be a terminal device or a part of a terminal device.

The apparatus may have two modes, a default mode, and a polarization optimization mode. In default mode, one display is allocated as the content view (such as full-size photo/video) while a second display may display instructions or other applications, for example. In polarization optimization mode the apparatus switches content presentation between the two displays such that full-screen content is provided on the screen which allows for correct orientation, while the second display presents instructions and may display, for example, thumbnail view of the main content.

In step 700, the apparatus is configured to detect that the user of the apparatus is wearing sunglasses. In an embodiment, the detection may be performed automatically utilising camera of the apparatus. In an embodiment, the user of the camera may indicate to the apparatus that sunglasses are being worn.

In step 702, the apparatus is configured to enter, based on the detection, polarization optimization mode for optimizing presentation based on display polarization and adapt content presentation.

In step 704, the apparatus is configured to allocate portrait-oriented content for first display 500 with first polarization characteristics and landscape-oriented content for second display 502 with second polarization characteristics.

In step 706, the apparatus is configured to present content using at least one of the at least two displays.

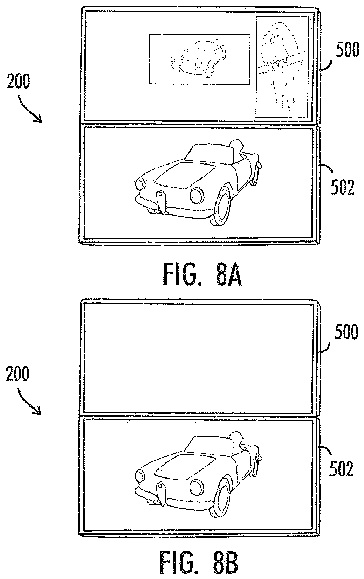

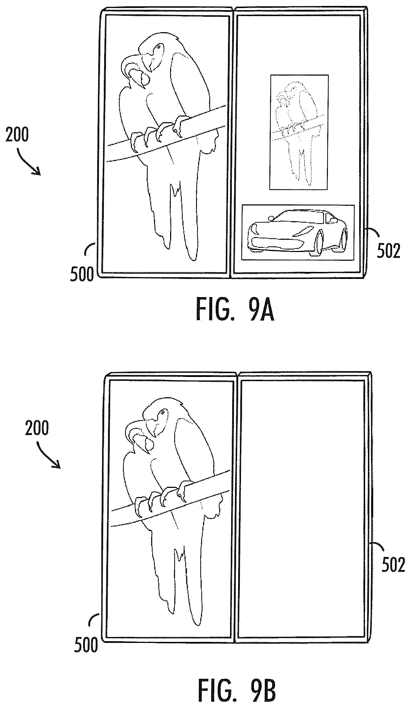

Figs. 8A, 8B, 9A and 9B illustrate an example of a terminal device 200 comprising two displays, a first display 500, and a second display 502 having polarization characteristics as illustrated in Fig. 6.

In an embodiment, the content to be displayed is allocated for presentation by the display of the dual display that allows best viewability according to the orientation of the terminal device. Thus, a landscape-orientation image of a classic sportscar may be allocated to display that allows for high-quality viewing experience when apparatus is held in landscape orientation (in this example the second display 502) as illustrated in Figs. 8A and 8B. On the other hand, a portrait-orientation photo of parrots is shown on the display that allows for high-quality viewing experience when apparatus is held in portrait orientation (in this example, first display 500) as illustrated in Fig. 9A and 9B.

In example of Figs. 8A and 8B, main content is displayed on the second display 502 offering good visibility while secondary content is displayed on the first display 500 that may be difficult to view or completely black to the user. In example of Figs. 9A and 9B, main content is displayed on the first display 500 offering good visibility while secondary content is displayed on the second display 502 that may be difficult to view or completely black to the user. In some embodiments, the terminal device may switch off the display providing poor visibility and only present information on the display offering good visibility on the dual-display device. This reduces power consumption of the terminal device.

In an embodiment, dual-display terminal device 200 may control the display brightness of at least one of the displays based on the sunglass detection, display polarization information and terminal device orientation. In this case, the terminal device attempts to make the less visible display better visible for the user. For example, the level of light blocking may depend on the polarization filter, the viewing angle, user's head rotation, etc.

According to an embodiment, the dual-display terminal device 200 may take battery level of the terminal device into account. For example, when battery level is high or the terminal device is connected to external power (such as a battery pack), the device can utilize at least primarily the above-mentioned brightness optimization approach. On the other hand, when device is low on battery, the device may utilize content as described in connection with Fig. 7.

In an embodiment, when battery level of the device is low, the device may turn off the display that has the opposite polarization (and thus cannot be properly seen by user wearing sunglasses). Thus, the device may select (upon detecting user with sunglasses) only one of the at least two screens to keep on, where the selection is based on the polarization characteristics of the device screens.

In some examples, user may be prompted to adjust the brightness of at least one of the displays relative to the other display when using sunglasses. User may thus have at least two separate brightness settings: one for default use, one for use with sunglasses. The default may adjust the dual displays together, while the other one bumps the brightness of one display relative to the other.

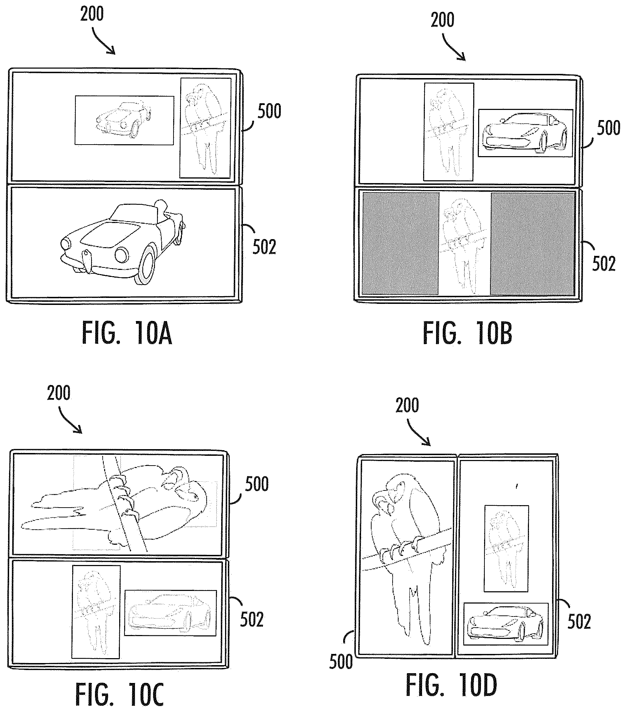

Figs. 10A, 10B, 10C and 10D illustrate an example of a terminal device 200 comprising two displays, a first display 500, and a second display 502 having polarization characteristics as illustrated in Fig. 6.

In the situation of Fig. 10A, the first display 500 shows gallery preview of images and the second display 502 shows an image from the gallery in landscape orientation. The gallery preview may be invisible to the user because of conflicting polarities. However, the user may swipe the screen to next photo, which is in this example in different orientation. This would result to the view of Fig. 10B where the next portrait orientation image of parrot is shown on the landscape display (second display 502).

In an embodiment, displaying the content is adapted as illustrated in Fig. 10C to allow the user to continue browsing or rotate the device for a more detailed view of the image. The user may rotate device as illustrated in Fig. 10D to view the parrot image optimally.

Above embodiments are related to dual-screen terminal devices. However, some embodiments may be applied to single device terminal devices as well. For example, the display of the device may not appear complete black for the user, but some content remains visible. It is still more difficult for the user to see the content.

In devices with only one display, the display content may be optimized based on device orientation and sunglasses.

In an embodiment, after detecting that the user is wearing sunglasses, the device may be configured to select, based on the detection, orientation for the visual content to be displayed. For example, a one-display device may rotate the displayed content prompting the user to turn the device. Thus, the turning of the content can happen before the user changes the orientation of the device, which triggers the user to turn the device.

In an embodiment, the terminal device may be configured, after detecting that the user is wearing sunglasses, select, based on the detection, a set of user interface elements to be displayed from two or more sets of user interface elements.

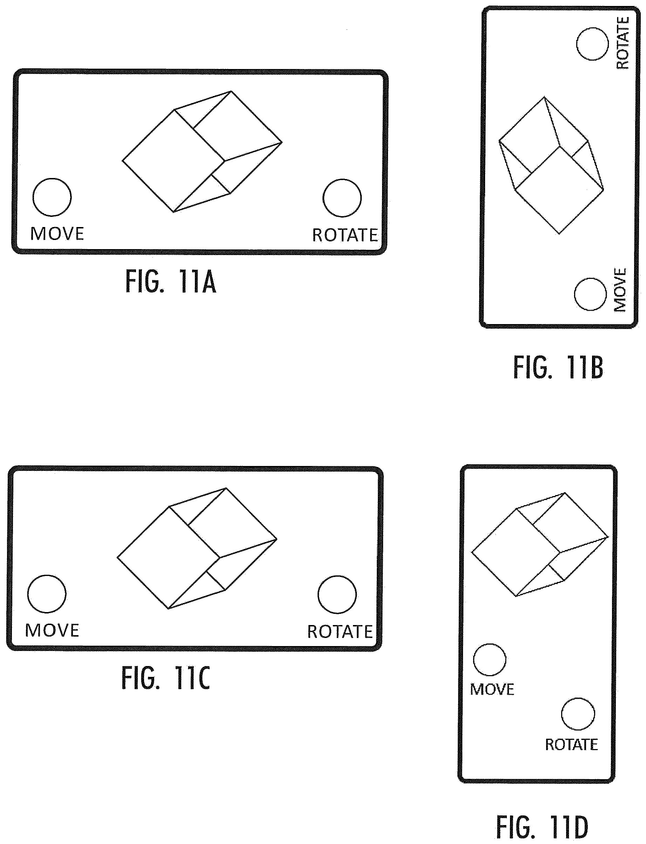

Figs. 11A, 11B, 11C and 11D illustrate an example of a one-display terminal device where the terminal device is configured to adapt the appearance of the user interface elements for better presentation of visible content in another orientation. Figs. 11A, 11B illustrate an example, where the user interface, when rotated, does not change. This forces the user to keep the terminal device in the orientation selected by the application designer. If there is a conflict between the polarization of the display and the sunglasses worn by the user, this may lead to problems for example if the landscape orientation of the display of the terminal device provides poor visibility. In an embodiment, an alternative appearance for user interface elements may be selected that is generally intended to be used in a single orientation (e.g., landscape) only. This alternative appearance may be allowed only for a user wearing sunglasses.

Fig. 11C illustrates an example where another set of user interface elements is selected for portrait orientation of the terminal device. The usability of the terminal device remains good also in this orientation because the adapted position of the user interface elements.

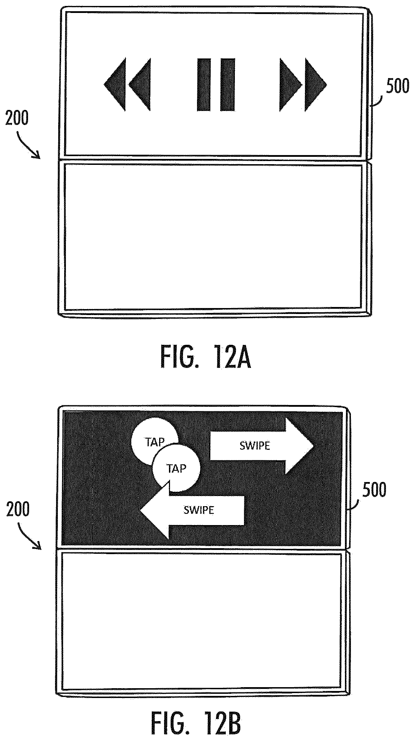

In an embodiment, if the terminal device comprises one or more touch screen displays, touch gestures controlling the operation of the apparatus may be adapted based on the detection that the user is wearing sunglasses, according to the visibility of content to the user. Figs. 12A and 12B illustrate this example. Fig. 12A illustrates a situation, where the first display 500 of the terminal device 200 is dedicated to user interface elements that user selects by touch. However, the first display 500 may be difficult to read for the user wearing polarizing sunglasses. Thus, the user may have it hard to operate a very delicate user interface on such a display. Fig. 12B illustrate adapted control gestures, where user can, for example, by swiping left indicate rewind, swiping right indicate fast-forward and double tap anywhere on the first display 500 of the terminal device 200 for pause.

There are various alternatives how to adapt the user interface. For example, the required gestures may be simplified. Only a limited number of gestures may be possible, and user is able to perform them anywhere on the affected display, i.e., user does not need to, hit a small button, for example, to perform a given task.

In another example, alternative gestures may be utilised. For example, the gesture interface may firstly rely on simple gestures in conjunction with visual user interface elements. According to the adaptation, simple gestures may now be performed in alternative manner. For example, instead of regular touch controls, the affected display may utilize multi-finger gestures.

The adaptation of the gestures may be indicated on the display that remains visible to the user. On the other hand, certain gestures may also be moved to this display.

In an embodiment, the user of the device may create user profiles, for each pair of sunglasses used, for example. Thus, the device can, for example, detect exactly which pair of sunglasses the user is currently using and apply the preferred profile. For example, the profile selection mechanism can be part of facial recognition operation used to open a locked device.

An embodiment provides a computer program embodied on a distribution medium, comprising program instructions which, when loaded into an electronic apparatus, are configured to control the apparatus to execute the embodiments described above.

The computer program may be in source code form, object code form, or in some intermediate form, and it may be stored in some sort of carrier, which may be any entity or device capable of carrying the program. Such carriers include a record medium, computer memory, read-only memory, and a software distribution package, for example. Depending on the processing power needed, the computer program may be executed in a single electronic digital computer or it may be distributed amongst several computers.

The apparatus may also be implemented as one or more integrated circuits, such as application-specific integrated circuits ASIC. Other hardware embodiments are also feasible, such as a circuit built of separate logic components. A hybrid of these different implementations is also feasible. When selecting the method of implementation, a person skilled in the art will consider the requirements set for the size and power consumption of the apparatus, the necessary processing capacity, production costs, and production volumes, for example.

In an embodiment, an apparatus in a communication system comprising at least one processor; and at least one memory including computer program code, the at least one memory and computer program code configured to, with the at least one processor, cause the apparatus to: detect that the user of the apparatus is wearing sunglasses; control, based on the detection, allocation and presentation of the visual content on the one or more displays according to the polarization characteristics of the one or more displays.

It will be obvious to a person skilled in the art that, as the technology advances, the inventive concept can be implemented in various ways. The disclosure and its embodiments are not limited to the examples described above but may vary within the scope of the claims.

## Claims

1. An apparatus comprising one or more displays with respective polarization characteristics for displaying visual content to a user of the apparatus, at least one of a first display or a second display utilising different polarization characteristics compared to other displays if the apparatus has more than one display, the apparatus further comprising:
means for detecting that the user of the apparatus is wearing sunglasses;
means for controlling, based on the detection, allocation and presentation of the visual content on the one or more displays according to the polarization characteristics of the one or more displays.

2. The apparatus of claim 1, comprising
means for determining orientation of visual content to be displayed;
means for allocating for the visual content a display having polarization characteristics allowing viewing the visual content in the determined orientation when the user is wearing sunglasses.

3. The apparatus of any preceding claim, comprising
a first display having first polarization characteristics and a second display having second polarization characteristics;
means for allocating portrait-oriented visual content to the first display and landscape-oriented visual content to the second display; and
means for presenting visual content using at least one of the two displays.

4. The apparatus of claim 1 or 2, comprising
a first display having first polarization characteristics and a second display having second polarization characteristics;
means for allocating visual content to a display according to the polarization characteristics of the displays;
means for detecting rotating of the apparatus; and
means for allocating the visual content to another display based of the detection.

5. The apparatus of any preceding claim, comprising
means for controlling, based on the detection, brightness of the one or more displays and optimization of battery usage of the apparatus.

6. The apparatus of any preceding claim, comprising
means for selecting, based on the detection, a set of user interface elements to be displayed from two or more sets of user interface elements.

7. The apparatus of any preceding claim, comprising
means for selecting, based on the detection, orientation for the visual content to be displayed.

8. The apparatus of any preceding claim, comprising
one or more touch screen displays;
means for adapting, based on the detection, touch gestures controlling the operation of the apparatus.

9. A method for an apparatus, comprising
detecting that the user of the apparatus is wearing sunglasses;
controlling, based on the detection, allocation and presentation of the visual content on one or more displays of the apparatus according to the polarization characteristics of the one or more displays, where at least one display utilises different polarization characteristics compared to other displays if the apparatus has more than one display.

10. The method of claim 9, further comprising:
controlling, based on the detection, the allocation of the one or more displays for displaying the visual content, brightness of the one or more displays and optimization of battery usage of the apparatus.

11. The method of claim 9 or 10, further comprising:
determining orientation of visual content to be displayed;
allocating for the visual content a display having polarization characteristics allowing viewing the visual content in the determined orientation when the user is wearing sunglasses.

12. The method of any preceding claim 9 to 11, comprising
selecting, based on the detection, a set of user interface elements to be displayed from two or more sets of user interface elements.

13. The method of any preceding claim 9 to 12, comprising
selecting, based on the detection, orientation for the visual content to be displayed.

14. The method of any preceding claim 9 to 13, comprising
adapting, based on the detection, touch gestures controlling the operation of the apparatus having one or more touch screen displays.

15. A computer program comprising instructions for causing an apparatus at least to:
detect that the user of the apparatus is wearing sunglasses;
control, based on the detection, allocation and presentation of the visual content on one or more displays of the apparatus according to the polarization characteristics of the one or more displays, where at least one display utilises different polarization characteristics compared to other displays if the apparatus has more than one display.
